# EUROPÄISCHE PATENTANMELDUNG

(11) **EP 4 115 719 A1**
(43) Veröffentlichungstag der Anmeldung: **11.01.2023**
(21) Anmeldenummer: 22183006.0
(22) Anmeldetag: 05.07.2022
(51) Int. Cl.: A01B 33/06, A01B 33/08

(54) **LANDWIRTSCHAFTLICHE BODENBEARBEITUNGSMASCHINE**

(30) Priorität: 06.07.2021 DE 102021117433
(71) Anmelder: Pöttinger Landtechnik GmbH, 4710 Grieskirchen (AT)
(72) Erfinder: BERGER, Thomas, 4710 Grieskirchen (AT); MEINDLHUMER, Wilhelm, 4710 Grieskirchen (AT)
(74) Vertreter: Thoma, Michael

(57) **Zusammenfassung**

Die vorliegende Erfindung betrifft eine landwirtschaftliche Bodenbearbeitungsmaschine, insbesondere Kreiselegge oder Grubber, mit zumindest einem Werkzeugbalken, an dem rotatorisch antreibbare Bodenbearbeitungswerkzeuge drehbar gelagert sind, einem Antriebsstrang zum rotatorischen Antreiben der Bodenbearbeitungswerkzeuge mit zumindest einem am Werkzeugbalken angeordneten eintreibenden Getriebe, das eingangsseitig von einem Schlepper her über eine Antriebswelle und ggf. über ein zwischengeschaltetes Eingangsgetriebe antreibbar ist und abtriebsseitig über ein Antriebszahnrad die Bodenwerkzeuge antreibt, sowie einem nachgiebigen Dämpfungselement in dem Antriebsstrang zum Abmildern von Drehmomentstößen und/oder Kraftspitzen, wobei das Dämpfungselement zwischen dem Antriebszahnrad und dem eintreibenden Getriebe vorgesehen ist und eine nachgiebige Gelenkscheibe umfasst, die einerseits und einem Abtriebselement des eintreibenden Getriebes andererseits drehmomentübertragend verbunden ist.

## Beschreibung

Die vorliegende Erfindung betrifft eine landwirtschaftliche Bodenbearbeitungsmaschine insbesondere in Form einer Kreiselegge, mit zumindest einem Werkzeugbalken, an dem rotatorisch antreibbare Bodenbearbeitungswerkzeuge drehbar gelagert sind, einem Antriebsstrang zum Antreiben der Bodenbearbeitungswerkzeuge umfassend zumindest ein an dem Werkzeugbalken angeordnetes eintreibendes Getriebe, das eingangsseitig von einem Schlepper her über eine Zapfwelle und ggf. über ein zentrales Eingangsgetriebe antreibbar und abtriebsseitig über ein Antriebszahnrad die Bodenbearbeitungswerkzeuge antreibt, sowie einem nachgiebigen Dämpfungselement im Antriebsstrang zum Abmildern von Drehmoment- und/oder Kraftstößen.

Bodenbearbeitungsmaschinen wie Kreiseleggen oder Grubber weisen regelmäßig an einem Werkzeugbalken drehbar gelagerte Bodenbearbeitungswerkzeuge wie beispielsweise Zinkenrotoren auf, die um aufrechte Werkzeugachsen rotatorisch angetrieben werden und in den Boden eingreifen, um diesen aufzulockern, zu zerkrümeln bzw. Wurzelwerk und Ähnliches zu zerschneiden und in der gewünschten Weise zu hinterlassen. Dabei werden die an einem Werkzeugbalken nebeneinander aufgereihten Bodenwerkzeuge oft über eine Kette von ineinandergreifenden Zahnrädern angetrieben, die die Bodenbearbeitungswerkzeuge miteinander synchronisieren bzw. antriebstechnisch aneinanderkoppeln, so dass die Bodenbearbeitungswerkzeuge abwechselnd gegenläufig rotieren. Eines der Zahnräder aus der Stirnradkette dient dabei als Antriebszahnrad, welches von einem eintreibenden Getriebe her angetrieben wird, das auf dem Messerbalken angeordnet ist. Das Antriebszahnrad kann dabei koaxial zur Abtriebswelle des eintreibenden Getriebes angeordnet und damit drehfest gekoppelt sein, oder es kann zwischen dem eintreibenden Getriebe und dem auf der Werkzeugwelle sitzenden Zahnrad ein Querversatz vorgesehen sein und ein an der Abtriebswelle sitzendes Ritzel das am Werkzeug sitzende Zahnrad antreiben.

Dabei kommt es durch den Bodeneingriff der Bodenbearbeitungswerkzeuge zu mehr oder minder großen Drehmoment- und Reaktionskraftschwankungen, je nachdem, ob das Bodenbearbeitungswerkzeug in härtere oder weichere Bodenabschnitte eingreift und dabei möglicherweise auch noch die Arbeitstiefe schwankt. Trifft das Bodenbearbeitungswerkzeug auf härtere Hindernisse wie Steine, kommt es zu heftigeren Drehmomentstößen, die vom Bodenbearbeitungswerkzeug her in den Antriebsstrang eingetragen werden. Durch die kettenförmige Stirnradanordnung, über die die nebeneinander angeordneten Bodenbearbeitungswerkzeuge angetrieben werden, ergibt sich ein großes akkumuliertes Trägheitsmoment, in das nicht nur die Bodenwerkzeuge selbst und die miteinander in Eingriff stehenden Zahnräder bzw. Stirnräder eingehen, sondern auch noch das eintreibende Getriebe und das ggf. vorgeschaltete Eingangsgetriebe, so dass es zu ggf. hohen Belastungen des Antriebsstrangs kommt, wenn ein Bodenbearbeitungswerkzeug bei Auftreffen auf einen Stein abrupt abbremst.

Um solche Drehmomentstöße, Schwingungen und stark schwankenden Belastungen im Antriebsstrang abzumildern, wurde bereits vorgeschlagen, in den Antriebsstrang elastisch nachgiebige, schwingungsdämpfend wirkende und Drehmomentstöße abfedernde Dämpferelemente einzubauen, um die von den Rotorzinken bzw. Bodenbearbeitungswerkzeugen her kommenden, hohen Belastungen nicht ungedämpft in den Antriebsstrang einzuleiten. Beispielsweise zeigt die Schrift DE 36 36 319 A1 eine Kreiselegge, deren Rotorzinken nachgiebig am Zinkenträger gelagert sind. Der abgekröpfte obere Abschnitt der Zinken ist jeweils in einem Gummiquetschlager montiert, das für die Rotorzinken eine Art Gelenk bildet, so dass die Rotorzinken unter übermäßigen Belastungen beispielsweise bei Auftreffen auf einen Stein ausweichen können.

Aus der Schrift DE 44 10 836 A1 ist es ferner bekannt, zwischen den miteinander kämmenden Zahnrädern und den davon jeweils angetriebenen Werkzeugwellen eine Blattfederanordnung vorzusehen, die ein Verdrehen der Werkzeugwellen und damit der Rotorzinken gegenüber den Zahnrädern zulässt, wenn übermäßige Antriebsmomente bzw. -reaktionen wirken.

Solche vorbekannten Dämpfungseinrichtungen sind jedoch recht aufwändig und machen die Rotorzinkenbaugruppe relativ teuer. Aufgrund der hohen Zinkenzahl kommt eine beträchtliche Zahl an Dämpfungselementen zusammen, die nicht nur teuer sind, sondern auch ein entsprechendes Gewicht mit sich bringen, was hinsichtlich des akkumulierten Trägheitsmoments ungünstig ist.

Der vorliegenden Erfindung liegt daher die Aufgabe zugrunde, eine verbesserte landwirtschaftliche Bodenbearbeitungsmaschine der genannten Art zu schaffen, die Nachteile des Standes der Technik vermeidet und Letzteren in vorteilhafter Weise weiterbildet. Insbesondere sollen empfindliche Teile des Antriebsstrangs verlässlich vor Beschädigungen durch Drehmomentstöße geschützt werden, ohne hierfür Bauraum fressende, gewichtserhöhende und schwierig auszutauschende Anordnungen zu benötigen.

Erfindungsgemäß wird die genannte Aufgabe durch eine landwirtschaftliche Bodenbearbeitungsmaschine gemäß Anspruch 1 gelöst. Bevorzugte Ausgestaltungen der Erfindung sind Gegenstand der abhängigen Ansprüche.

Es wird also vorgeschlagen, ein nachgiebiges Dämpfungselement zwischen dem Antriebszahnrad und dem eintreibenden Getriebe vorzusehen, um das eintreibende Getriebe verlässlich vor Beschädigungen durch Überlastungen und stoßhafte Belastungen zu schützen. Dabei schützt das solchermaßen angeordnete Dämpfungselement das eintreibende Getriebe vor Drehmomentstößen und Belastungsspitzen von verschiedenen Bodenbearbeitungswerkzeugen her, da solche Belastungsspitzen und Drehmomentstöße am Antriebszahnrad sozusagen zusammenlaufen und Letzteres gegenüber dem Eingangsgetriebe gedämpft wird.

Erfindungsgemäß ist vorgesehen, dass das Dämpfungselement zwischen dem Antriebszahnrad und dem eintreibenden Getriebe vorgesehen ist und eine nachgiebige Gelenkscheibe umfasst, die einerseits mit dem Antriebszahnrad und andererseits mit einem Abtriebselement des eintreibenden Getriebes jeweils Drehmoment übertragend verbunden ist.

Durch die Anordnung des Dämpfungselements vor dem eintreibenden Getriebe (bei Betrachtung der von den Werkzeugen her kommenden Drehmomentstöße und Belastungsspitzen) kann nicht nur das eintreibende Getriebe, sondern auch weitere näher zum Schlepper hin angeordnete Teile des Antriebsstrangs wie eine Gelenkwelle und ein zentrales Eingangsgetriebe vor Beschädigungen durch stoßhafte Belastungen geschützt werden. Andererseits ist durch die Anordnung des Dämpfungselements hinter dem Antriebszahnrad keine große Zahl an Dämpfungselementen notwendig, da nicht jeder Rotorzinken bzw. jedes Bodenwerkzeug separat gedämpft werden muss. Durch den Schutz des eintreibenden Getriebes brauchen keine speziellen Gelenkwellen, die das eintreibende Getriebe antreiben, verwendet werden, zudem ergibt sich eine platzsparende Bauweise.

Insbesondere kann als Dämpfungselement eine Hardyscheibe vorgesehen sein, die einen elastisch nachgiebigen Scheibenkorpus mit axialen Befestigungsausnehmungen aufweisen kann, wobei die genannte Hardyscheibe über Bolzen in den genannten Befestigungsausnehmungen einerseits an dem genannten Antriebszahnrad und andererseits an dem Abtriebselement des eintreibenden Getriebes drehmomentübertragend befestigt sein kann. Der elastisch nachgiebige Scheibenkorpus kann zumindest teilweise oder überwiegend aus einem gummielastischen Werkstoff gefertigt sein, beispielsweise aus Kautschuk oder einem künstlichen Elastomer mit gummielastischen Eigenschaften. Die Befestigungsausnehmungen können Befestigungsbuchsen beispielsweise aus Metall oder einem anderen harten Werkstoff umfassen, wobei solche Befestigungshülsen für die Befestigungsbolzen in das Material des Scheibenkorpus eingebettet, beispielsweise eingegossen sein können. Die genannten Befestigungsausnehmungen können Durchgangsbohrungen bzw. -ausnehmungen bilden, die sich zumindest näherungsweise senkrecht zu den Flachseiten der Scheibe bzw. zumindest näherungsweise parallel zu deren Hauptachse erstrecken können. Eine solche Hardyscheibe kann nicht nur Drehmomentstöße bzw. Kraftspitzen, die aus der Übertragung der Antriebsbewegung resultieren, abmildern, sondern vorteilhafterweise auch Fluchtungsfehler zwischen dem Getriebe und der Werkzeugbaugruppe, genauer gesagt zwischen dem Abtriebselement des eintreibenden Getriebes und dem Antriebszahnrad zum Antreiben der Bodenwerkzeuge ausgleichen. Gleichzeitig ergibt sich eine platzsparende, kompakte Bauweise, wobei trotz einer solchen platzsparenden Bauweise eine einfache Montage ermöglicht wird.

Die Gelenkscheibe kann koaxial auf das Antriebszahnrad gesetzt und damit fest verbunden, beispielsweise mittels Schraubbolzen verschraubt werden.

Das eintreibende Getriebe kann mit seinem Abtriebselement koaxial zu dem Antriebszahnrad und/oder zu der Gelenkscheibe angeordnet werden, wobei das genannte Abtrieselement des eintreibenden Getriebes ebenfalls fest mit der genannten Gelenkscheibe verbunden, beispielsweise verschraubt sein kann. Alternativ kann zwischen der Gelenkscheibe und dem Abtriebselement des Getriebes aber auch nur eine drehfeste, drehmomentübertragende Verbindung vorgesehen sein, die in axialer Richtung lösbar, beispielsweise als Steckverbindung ausgebildet sein kann, um eine einfache Montage bzw. Demontage des eintreibenden Getriebes zu ermöglichen. Beispielsweise kann das genannte Abtriebselement zur Gelenkscheibe hin vorspringende Eingriffsfinger bzw. -klauen aufweisen, die in die genannten Befestigungsausnehmungen der Hardyscheibe eingreifen können.

Grundsätzlich kann die Befestigung auch umgekehrt getroffen sein, beispielsweise dergestalt, dass die Hardyscheibe fest an dem Abtriebselement des eintreibenden Getriebes verschraubt ist und das Antriebszahnrad solche vorspringenden Eingriffsfinger oder -klauen aufweist, sodass die Hardyscheibe axial von dem Antriebszahnrad abgezogen werden kann.

Das genannte eintreibende Getriebe kann vorteilhafterweise an dem Werkzeugbalken montiert bzw. befestigt sein, an dem auch die Bodenbearbeitungswerkzeuge drehbar gelagert sind und/oder in dem das Antriebszahnrad aufgenommen sein kann. Beispielsweise kann das eintreibende Getriebe unmittelbar über der Werkzeugwelle eines der Bodenwerkzeuge sitzen und mit seiner Abtriebswelle koaxial zu der genannten Werkzeugwelle angeordnet sein. Die Antriebsbewegung kann von dem Abtriebselement des eintreibenden Getriebes unmittelbar über die Hardyscheibe auf das Antriebszahnrad gegeben werden, welches einerseits mit der Werkzeugwelle des darunter sitzenden Bodenbearbeitungswerkzeugs drehfest verbunden ist und andererseits mit einem oder mehreren Antriebszahnrädern anderer, benachbarter Bodenbearbeitungswerkzeuge kämmen kann.

Um die Antriebskräfte gleichmäßig in die Reihe von Bodenbearbeitungswerkzeugen einzuleiten bzw. die Übertragungskette entlang des Werkzeugbalkens kurz zu halten, kann das eintreibende Getriebe über die Gelenkscheibe an das Antriebszahnrad eines Bodenwerkzeugs angeschlossen sein, das in einem mittleren Abschnitt des Werkzeugbalkens vorgesehen ist bzw. ein mittleres Bodenwerkezug eine von dem eintreibenden Getriebe angetriebene Werkzeuggruppe bildet. Das von der Gelenkscheibe angetriebene Antriebszahnrad kann die Antriebsbewegung nach rechts und links an benachbarte Bodenbearbeitungswerkzeuge bzw. damit verbundene Zahnräder übertragen.

Die Dämpfung im Antriebsstrang über die genannte Gelenkscheibe zwischen dem Antriebszahnrad eines Bodenbearbeitungswerkzeugs und dem eintreibenden Getriebe und die hierdurch erreichte kompakte Bauweise kann insbesondere auch vorteilhaft sein, wenn der Werkzeugbalken schwenkbar bzw. aushebbar an einem zentralen Maschinenrahmen angelenkt ist, um aus einer abgesenkten Arbeitsposition in eine angehobene Vorgewende- und/oder Transportstellung verbracht werden zu können. Beispielsweise kann der Werkzeugbalken um eine liegende, zumindest näherungsweise in Fahrtrichtung weisende Schwenkachse schwenkbar am zentralen Maschinenrahmen gelagert sein, um aus der liegenden, seitlich auskragenden Arbeitsstellung nach oben in eine Vorgewende- bzw. Transportstellung geklappt werden zu können.

Das eintreibende Getriebe kann etwa mittig an einem solchermaßen angebrachten Werkzeugbalken montiert sein und mit diesem in die ausgehobene Vorgewende- bzw. Transportstellung nach oben geschwenkt werden, wobei das eintreibende Getriebe über eine Gelenkwelle an ein zentrales Eingangsgetriebe angebunden sein kann, das an dem zentralen Maschinenrahmen montiert sein kann. Das genannte zentrale Eingangsgetriebe kann eingangsseitig über eine Gelenkwelle von der Zapfwelle eines Schleppers angetrieben werden und ausgangsseitig über eine weitere Gelenkwelle das seitlich angeordnete eintreibende Getriebe antreiben. Durch die Anordnung der nachgiebigen Gelenkscheibe zwischen dem eintreibenden Getriebe und dem Antriebszahnrad am Werkzeugbalken ist keine spezielle Seitengelenkwelle notwendig. Dennoch ist sowohl das seitliche eintreibende Getriebe als auch das zentrale Eingangsgetriebe und die dazwischen befindliche Gelenkwelle gegen Überlastungen bzw. Drehmomentstöße und Kraftspitzen geschützt.

Die Bodenbearbeitungsmaschine kann zwei seitlich rechts und links auskragende Werkzeugbalken aufweisen, die in der genannten Weise aus der abgesenkten, liegenden und seitlich auskragenden Arbeitsstellung jeweils in eine aufrechte Transportstellung bzw. eine dazwischenliegende Vorgewendestellung ausgehoben werden können. Dabei kann jedem der genannten Werkzeugbalken ein seitliches eintreibendes Getriebe zugeordnet sein, das in der genannten Weise über eine nachgiebige Gelenkscheibe abgesichert und über jeweils eine Gelenkwelle an das zentrale Eingangsgetriebe angebunden sein kann.

Durch die Verwendung der nachgiebigen Gelenkscheibe zwischen den Abtriebselementen der eintreibenden Getriebe und den daran angebundenen Antriebszahnrädern der Bodenbearbeitungswerkzeuge können weitere Dämpferelemente im Antriebsstrang entbehrlich sein, sodass die genannten Gelenkscheiben, insbesondere die genannten Hardyscheiben die einzigen Dämpferelemente im Antriebsstrang sein können. Insbesondere können die Bodenbearbeitungswerkzeuge in an sich bekannter Weise starr ausgebildet und die Werkzeugwellen in starrer Weise mit den Antriebszahnrädern verbunden sein, sodass auf aufwändige Federlagerungen zwischen den Zahnrädern und den Gelenkwellen oder auf Gummiquetschlager für die Rotorzinken verzichtet sein kann. Gleichwohl ist es aber dennoch möglich, ggf. zusätzliche Dämpferelemente an anderen Stellen bzw. Abschnitten des Antriebsstrangs vorzusehen, beispielsweise auf der Ausgangsseite des zentralen Eingangsgetriebes oder an anderer Stelle.

Die Erfindung wird nachfolgend anhand eines bevorzugten Ausführungsbeispiels und zugehörigen Zeichnungen näher erläutert. In den Zeichnungen zeigen:

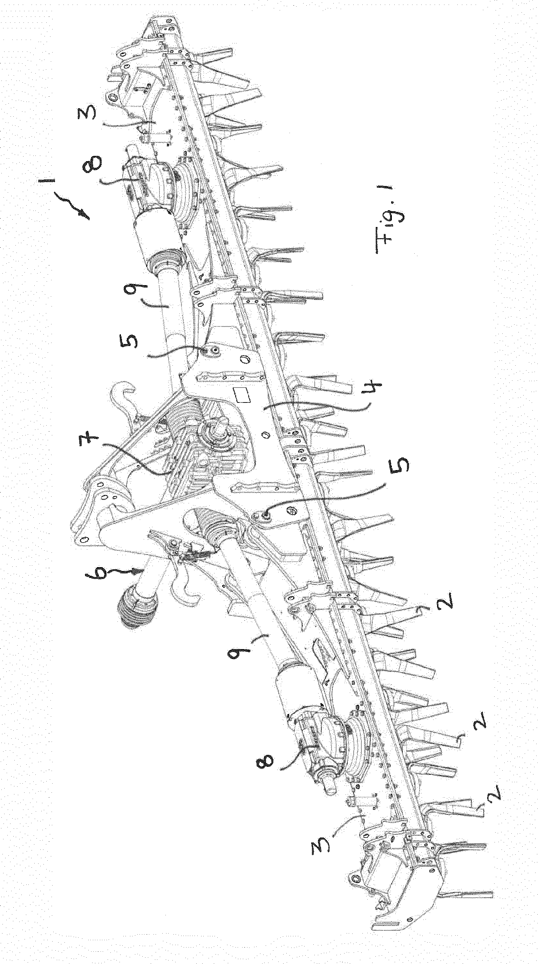

- Fig. 1:: eine perspektivische Gesamtansicht einer Bodenbearbeitungsmaschine in Form einer Kreiselegge nach einer vorteilhaften Ausführung der Erfindung, die von einem zentralen Maschinenrahmen seitlich auskragende Werkzeugbalken mit jeweils einem eintreibenden Getriebe aufweist, und

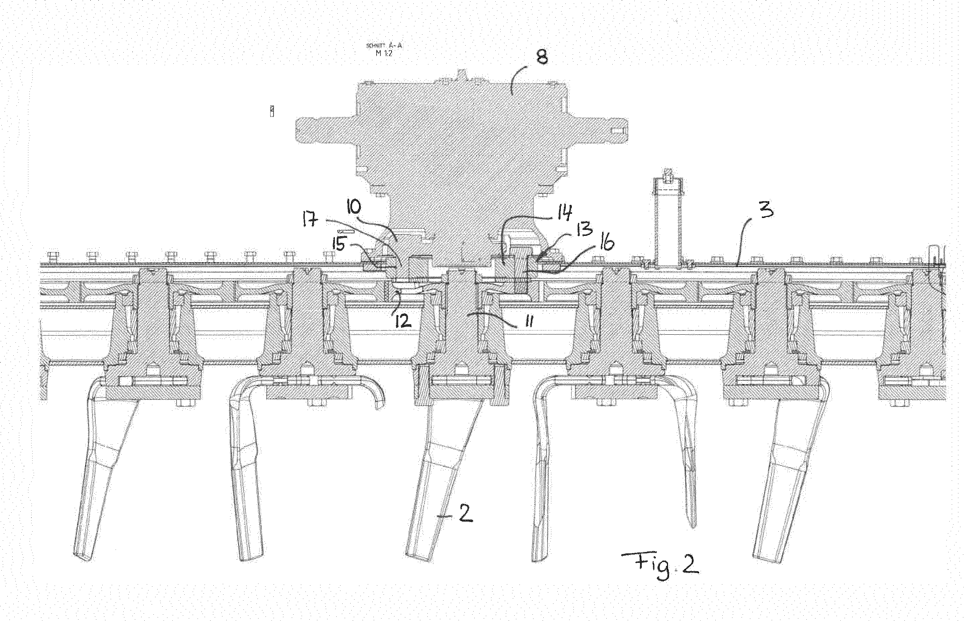

- Fig. 2:: eine ausschnittsweise Schnittansicht eines der Werkzeugbalken im Bereich des daran angeordneten eintreibenden Getriebes, die das Dämpfungselement in Form einer Hardyscheibe zwischen dem Abtriebselement des eintreibenden Getriebes und dem Antriebszahnrad des davon angetriebenen Bodenbearbeitungswerkzeugs zeigt.

Wie die Figuren zeigen, kann die landwirtschaftliche Bodenbearbeitungsmaschine 1 in Form einer Kreiselegge oder eines Grubbers ausgebildet sein und eine Reihe von Bodenbearbeitungswerkzeugen 2 aufweisen, die als Zinkenrotor ausgebildet sein und um aufrechte Werkzeugachsen rotatorisch antreibbar sein können. Die genannten Bodenbearbeitungswerkzeuge 2 können drehbar an einem Werkzeugbalken 3 gelagert sein, der sich in der Arbeitsstellung liegend quer zur Fahrtrichtung erstrecken kann, wobei die Maschine auch zwei oder mehrere solcher Werkzeugbalken 3 aufweisen kann, die in entsprechender Weise mit Bodenbearbeitungswerkzeugen 3 bestückt sind.

Beispielsweise können an einem zentralen Maschinenrahmen 4 rechts und links auskragend zwei Werkzeugbalken 3 vorgesehen sein, wobei die genannten Werkzeugbalken 3 um liegende Schwenkachsen 5, die in Fahrtrichtung weisen können, schwenkbar an dem Maschinenrahmen 4 angelenkt sein können, sodass die Werkzeugbalken 3 zusammen mit den daran gelagerten Bodenbearbeitungswerkzeugen 2 aus der in den Figuren gezeigten, abgesenkten Arbeitsstellung in eine ausgehobene Vorgewende- und/oder Transportstellung verbracht werden können, in der sich die Werkzeugbalken 3 beispielsweise aufrecht erstrecken können. Hierzu können Kraftheber beispielsweise in Form von Hydraulikzylindern vorgesehen sein. Je nach Arbeitsbreite kann die Bodenbearbeitungsmaschine 1 aber auch nicht klappbar, sondern starr ausgebildet sein und ggf. einen durchgängigen oder zumindest nicht klappbaren Werkzeugbalken 3 aufweisen.

Die Bodenbearbeitungswerkzeuge 2 können über einen mechanischen Antriebsstrang 6 rotatorisch angetrieben werden, beispielsweise von der Zapfwelle eines nicht gezeigten Schleppers her, an den der zentrale Maschinenrahmen 4 über eine Anbauvorrichtung angebaut werden kann, beispielsweise über einen Anbaubock und eine Dreipunktanlenkung mit Ober- und Unterlenkern.

Der Antriebsstrang 6 kann ein zentrales Eingangsgetriebe 7 aufweisen, das eingangsseitig über eine Gelenkwelle von der Schlepperzapfwelle angetrieben werden und als Verzweigungsgetriebe ausgebildet sein kann. Insbesondere kann das Eingangsgetriebe 7 ausgangsseitig zwei seitliche eintreibende Getriebe 8 antreiben, die an den genannten Werkzeugbalken 3 rechts und links vom zentralen Maschinenrahmen 4 bzw. dem Eingangsgetriebe 7 angeordnet sein können. Wie Figur 1 zeigt, können die eintreibenden Getriebe 8 über Gelenkwellen 9 von dem Eingangsgetriebe angetrieben werden.

Wie die Figuren zeigen, können die eintreibenden Getriebe 8 Verteilergetriebe bilden, die die Antriebsleistung an die Arbeitwerkzeuge der Seitenteile verteilen.

Die eintreibenden Getriebe 8 können vorteilhafterweise etwa mittig an den jeweiligen Werkzeugbalken 3 angeordnet sein und einem im mittleren Bereich des Maschinenbalkens 3 angeordneten Bodenwerkzeug 2 zugeordnet sein. Insbesondere können die eintreibenden Getriebe 8 jeweils an einer Oberseite der Werkzeugbalken 3 montiert sein und eine aufrechte, nach unten weisende Abtriebswelle 10 besitzen, an der ein Abtriebselement 10 drehfest befestigt sein kann. Das genannte Abtriebselement 10 kann um eine aufrechte Achse rotieren und insbesondere koaxial zu einer Werkzeugwelle 11 an eines der Bodenwerkzeuge 2 angeordnet sein. Das genannte Abtriebselement 10 treibt dabei ein Antriebszahnrad 12 an, das drehfest mit der genannten Werkzeugwelle 11 verbunden sein kann.

Wie Figur 2 zeigt, können die nebeneinander in Reihe angeordneten Bodenwerkzeuge 2 über eine Reihe bzw. Kette von Antriebszahnrädern 12 angetrieben werden, die jeweils als Stirnräder ausgebildet sein und miteinander in Zahneingriff stehen können, sodass die Antriebszahnräder 12 miteinander in Wälzeingriff stehen und nach Art einer Kette von dem Antriebszahnrad 12 her angetrieben werden, das mit dem Abtriebselement 10 des eintreibenden Getriebes 8 drehmomentübertragend verbunden ist.

Wie Figur 2 zeigt, ist das Abtriebselement 10 des eintreibenden Getriebes 8 über ein nachgiebiges Dämpfungselement 13 verbunden, welches eine nachgiebige Gelenkscheibe 14 umfasst, die vorteilhafterweise als Hardyscheibe ausgebildet sein kann.

Die genannte Gelenkscheibe 14 sitzt vorteilhafterweise koaxial auf dem Antriebszahnrad 12 und kann mit diesem drehfest verbunden sein, insbesondere mittels einer Bolzen- oder Schraubbolzenverbindung. Die genannte Hardyscheibe 14 kann einen gummielastischen Scheibenkorpus aufweisen, in dem Befestigungsausnehmungen 15 ausgebildet sein können, insbesondere von axialen Durchgangsbohrungen bzw. -ausnehmungen, sodass Befestigungsbolzen durch die Scheibe hindurchgesteckt werden bzw. hindurchgeschraubt werden können.

Die genannten Befestigungsausnehmungen 15 können durch Buchsen aus Hartmaterial wie beispielsweise Metallbuchsen ausgesteift sein, wobei solche Befestigungsbuchsen in das gummielastische Material des Scheibenkorpus eingegossen oder in anderer Weise befestigt sein können.

Wie Figur 2 zeigt, kann die Gelenkscheibe 14 mittels Schraubbolzen 16 an dem Antriebszahnrad 12 drehfest verschraubt sein.

Andererseits ist die Gelenkscheibe 14 drehfest mit dem Abtriebselement 10 des eintreibenden Getriebes 8 verbunden, wobei an dem Abtriebselement 10 axial vorspringende Eingriffsfinger 17 vorgesehen sein können, die in die genannten Befestigungsausnehmungen 15 in der Gelenkscheibe 14 drehmomentübertragend eingreifen können, insbesondere darin axial eingesteckt sein können.

Durch die nachgiebige Gelenkscheibe 14 können nicht nur Drehmomentstöße und übermäßige Belastungen, die von den Bodenbearbeitungswerkzeugen 2 her auf das eintreibende Getriebe 8 einwirken, abgemildert werden, sondern es können auch Fluchtungsfehler zwischen der Abtriebswelle des eintreibenden Getriebes 8 bzw. dessen Abtriebselement 10 einerseits und der Werkzeugwelle 11 andererseits ausgeglichen werden. Gleichzeitig lässt sich mit den genannten Gelenkscheiben 14 zwischen dem Abtriebselement 10 des eintreibenden Getriebes 8 und dem Antriebszahnrad 12 eines Bodenwerkzeugs 2 eine sehr platzsparende Dämpfungseinrichtung erzielen, wie dies Figur 2 zeigt.

## Patentansprüche

1. Landwirtschaftliche Bodenbearbeitungsmaschine, insbesondere Kreiselegge oder Grubber, mit zumindest einem Werkzeugbalken (3), an dem rotatorisch antreibbare Bodenbearbeitungswerkzeuge (2) drehbar gelagert sind, einem Antriebsstrang (6) zum rotatorischen Antreiben der Bodenbearbeitungswerkzeuge (2) mit zumindest einem am Werkzeugbalken (3) angeordneten eintreibenden Getriebe (8), das eingangsseitig von einem Schlepper her über eine Antriebswelle und ggf. über ein zwischengeschaltetes Eingangsgetriebe (7) antreibbar ist und abtriebsseitig über ein Antriebszahnrad (12) die Bodenwerkzeuge (2) antreibt, sowie einem nachgiebigen Dämpfungselement (13) in dem Antriebsstrang (6) zum Abmildern von Drehmomentstößen und/oder Kraftspitzen, **dadurch gekennzeichnet, dass** das Dämpfungselement (13) zwischen dem Antriebszahnrad (12) und dem eintreibenden Getriebe (8) vorgesehen ist und eine nachgiebige Gelenkscheibe (14) umfasst, die einerseits und einem Abtriebselement (10) des eintreibenden Getriebes (8) andererseits drehmomentübertragend verbunden ist.

2. Landwirtschaftliche Bodenbearbeitungsmaschine nach dem vorhergehenden Anspruch, wobei die Gelenkscheibe (14) als Hardyscheibe ausgebildet ist, die einen elastisch nachgiebigen Scheibenkorpus mit axialen Befestigungsausnehmungen (15) umfasst, wobei die Hardyscheibe mittels Bolzen und/oder Eingriffsfingern, die in die Befestigungsausnehmungen (15) eingreifen, einerseits drehfest mit dem Abtriebselement (10) des eintreibenden Getriebes (8) und andererseits drehfest mit dem Antriebszahnrad (12) verbunden ist.

3. Landwirtschaftliche Bodenbearbeitungsmaschine nach einem der vorhergehenden Ansprüche, wobei die Gelenkscheibe (14) koaxial auf das Antriebszahnrad (12) gesetzt und damit drehfest verbunden ist, und wobei das eintreibende Getriebe (8) mit seinem Abtriebselement (10) koaxial zur Gelenkscheibe (14) angeordnet ist und damit drehfest verbunden ist.

4. Landwirtschaftliche Bodenbearbeitungsmaschine nach dem vorhergehenden Anspruch, wobei die Gelenkscheibe (14) mit dem Antriebszahnrad (12) axialfest und drehfest verschraubt ist und mit dem Abtriebselement (10) des eintreibenden Getriebes (8) drehfest, aber axial lösbar durch eine Steckverbindung verbunden ist, oder wobei die Gelenkscheibe (14) mit dem Abtriebselement (10) des eintreibenden Getriebes (8) drehfest und axialfest verschraubt und mit dem Antriebszahnrad (12) drehfest, aber axial lösbar durch eine Steckverbindung verbunden ist.

5. Landwirtschaftliche Bodenbearbeitungsmaschine nach einem der vorhergehenden Ansprüche, wobei das eintreibende Getriebe (8) an einem mittleren Bodenbearbeitungswerkzeug (2) am Maschinenbalken (3) montiert ist, welches mittlere Bodenbearbeitungswerkzeug (2) von dem eintreibenden Getriebe (8) angetrieben wird und selbst wiederum neben sich benachbart angeordnete Bodenbearbeitungswerkzeuge (2) antreibt.

6. Landwirtschaftliche Bodenbearbeitungsmaschine nach einem der vorhergehenden Ansprüche, wobei das eintreibende Getriebe (8) über eine Gelenkwelle von einem zentralen Eingangsgetriebe (7) angetrieben wird, welches an einem zentralen Maschinenrahmen (4) angeordnet ist, an dem der zumindest eine Werkzeugbalken (3) mit dem daran montierten eintreibenden Getriebe (8) anhebbar und absenkbar, insbesondere um eine liegende, in Fahrtrichtung weisende Schwenkachse (5) schwenkbar gelagert ist.

7. Landwirtschaftliche Bodenbearbeitungsmaschine nach einem der vorhergehenden Ansprüche, wobei zumindest zwei Werkzeugbalken (3) vorgesehen sind, an denen jeweils ein eintreibendes Getriebe (8) angeordnet ist, wobei die eintreibenden Getriebe (8) von einem gemeinsamen Eingangsgetriebe (7) über Gelenkwellen (9) antreibbar sind.

8. Landwirtschaftliche Bodenbearbeitungsmaschine nach einem der vorhergehenden Ansprüche, wobei der Antriebsstrang (6) im Kraft- und/oder Drehmomentfluss stromauf und stromab der Gelenkscheibe (14) dämpferfrei ausgebildet ist.

9. Landwirtschaftliche Bodenbearbeitungsmaschine nach einem der Ansprüche 1 bis 7, wobei der Gelenkscheibe (14) weitere Dämpfungselement vor- oder nachgeschaltet sind.
